# EUROPEAN PATENT SPECIFICATION

(11) **EP 0 989 746 B1**
(45) Date of publication and mention of the grant of the patent: **16.01.2008**
(21) Application number: 99118050.6
(22) Date of filing: 22.09.1999
(51) Int. Cl.: H04N 5/232

(54) **Imaging apparatus having a high-speed imaging function with electronic zoom circuit**
Bildaufnahmevorrichtung eine Hochgeschwindigkeitsbildaufnahmefunktion mit elektronischer Zoomschaltung aufweisend
Appareil de prise de vue ayant une fonction de prise de vue à grande vitesse avec circuit de zoom électronique

(30) Priority: 28.09.1998 JP 27385198; 28.09.1998 JP 27287998
(43) Date of publication of application: 29.03.2000
(73) Proprietor: VICTOR COMPANY OF JAPAN, LTD., Yokohama-shi Kanagawa 221 (JP)
(72) Inventor: Miyahara, Hiroyuki, Yokohama-shi, Kanagawa-ken (JP); Taguchi, Kenji, Yokohama-shi, Kanagawa-ken (JP); Matsuoka, Kenji, Yokohama-shi, Kanagawa-ken (JP); Aso, Michihiro, Yokohama-shi, Kanagawa-ken (JP)
(74) Representative: HOFFMANN EITLE

(56) References cited:
- EP-A- 0 335 751
- EP-A- 0 796 008
- US-A- 4 890 165

## Description

### BACKGROUND ART OF THE INVENTION

### 1. Field of the Invention

The present invention relates to an electronic zoom circuit for electronically enlarging a video signal that is output from either the camera part or video part of a video camera.

### 2. Description of the Related Art

In current video cameras, a solid-state imaging section (CCD image sensor) that is formed by a plurality of solid-state imaging elements, is used as an imaging means that is smaller and lighter than an imaging tube and which can be produced at a low cost.

In general, the above-noted CCD image sensor has a solid-state imaging unit that is formed by a photoelectric conversion elements that receive light and store the received light as electrical charges, these photoelectric conversion elements being disposed in a matrix arrangement. The electrical charges that are stored by the photoelectric conversion elements are read out and transmitted so as to become the CCD output.

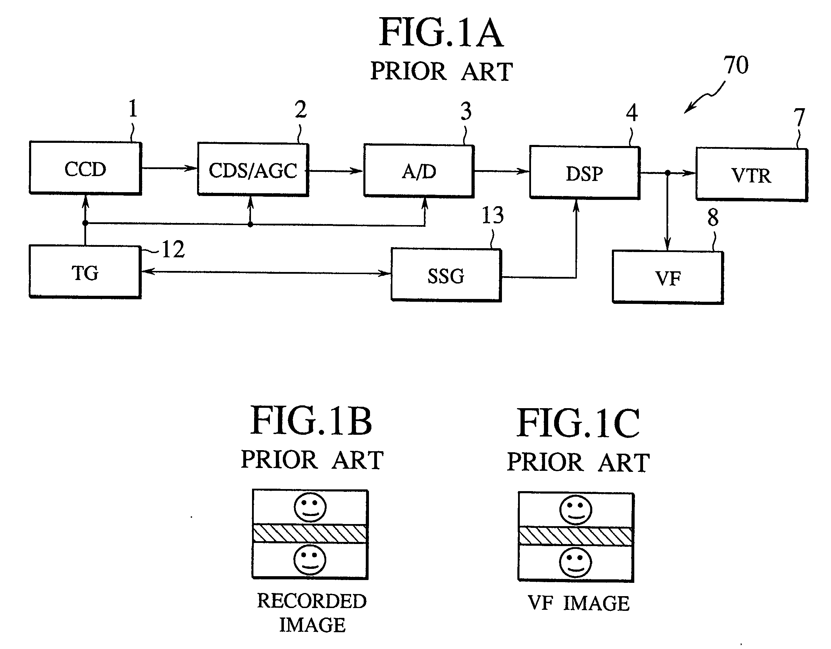

An image that is formed by a CCD image sensor can be verified by using a monitor apparatus such as a viewfinder (VF). The general construction a video camera of the past is shown in Fig.1A.

In Fig.1A, the video camera 70 has a CCD image sensor 1, a correlated double sampling/automatic gain (CDS/AGC) controller 2, which eliminates noise components from the signal from the CCD image sensor 1 and amplifies it with an appropriate gain, an analog-to-digital (A/D) converter 3, which converts a signal from the CDS/AGC controller 2 to a digital signal, and a digital signal processor (DSP) 4, which performs prescribed video processing on the digital signal that is sent from the A/D converter 3, and which outputs the resulting signal to a video tape recorder (VTR) 7 or display (viewfinder, or the like) 8. A timing generator (TG) 12 generates a signal for the purpose of driving CCD image sensor 1, CDS/AGC 2, A/D 3 and other devices peripheral to CCD image sensor 1. The TG 12 is connected to a sync signal generator (SSG) 13, which performs sync signal processing for the DSP 4.

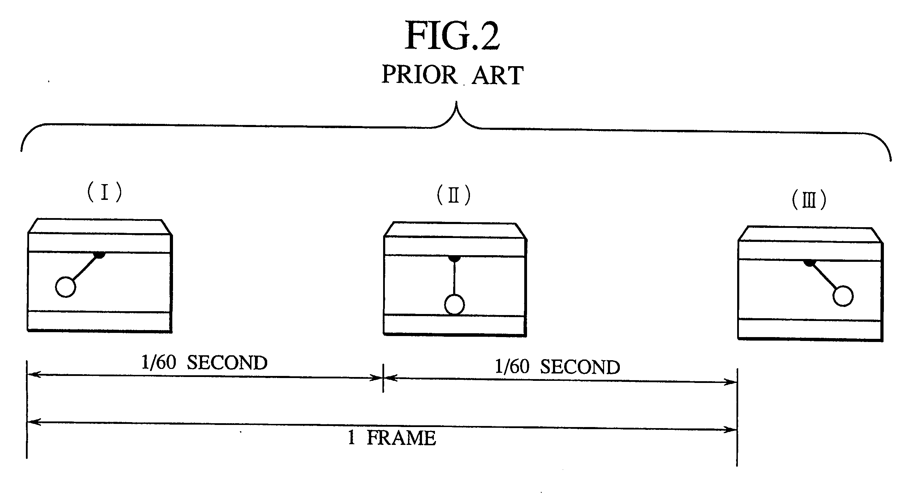

In a CCD image sensor, as shown in Fig.2, the odd or even field is generally read out with a field period of 1/60 second, and one image in a frame is formed based on the odd and the even fields. In recent years, however, to improve the dynamic image resolution, a high-speed imaging method has been developed, wherein the electrical charges that are stored by each photoelectric conversion element are read out a plurality of times during 1 field period and, as shown in Fig.1B, a plurality of images are recorded within one frame.

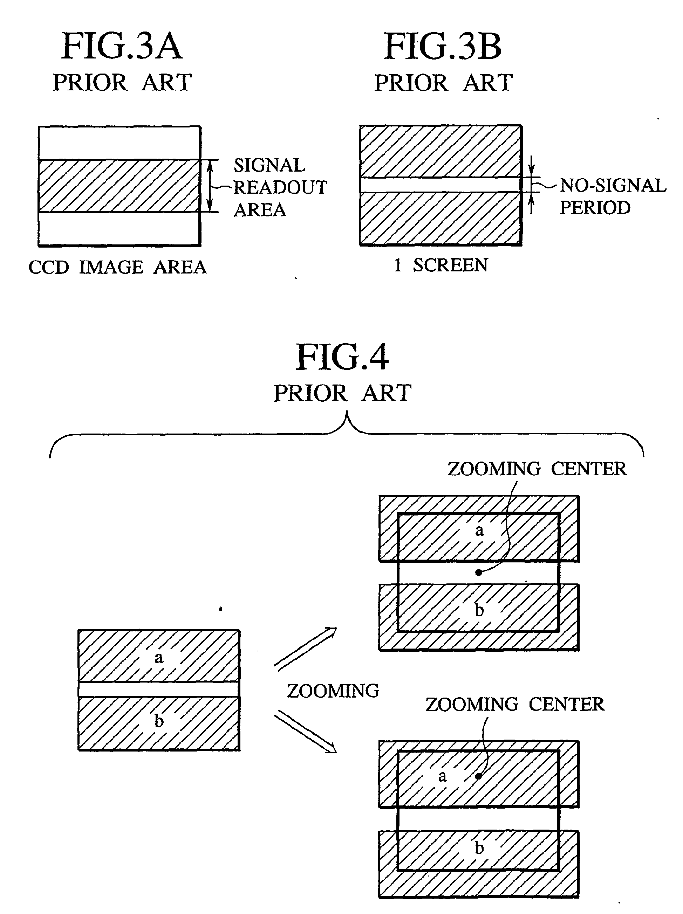

Fig.3A and Fig.3B generally illustrate the above-noted high-speed imaging function, these drawings illustrating the case in which a signal is read out two times within 1 field period, the hatched CCD pixel region of the signal as shown in Fig.3A only being read out two times during 1 field period, with the signal for other regions being read out at high speed and then discarded.

Thus, using the above-noted high-speed imaging function, the pixel information that is stored in the CCD pixels for the area that is not hatched in the CCD pixel area is forcibly discarded at high speed, and only the pixel information for the area that is hatched in the CCD pixel area is read out at high speed a plurality of times.

Fig. 3B shows the condition of displaying a signal that was read out the above-noted manner, wherein the two hatched areas at the top and bottom of the single screen are the two images that are continuously output from the CCD image sensor. Between the two images shown in Fig.3B is a no-signal part. This no-signal part corresponds to the period of time during which the signal is discarded by means of high-speed readout, during which period a masking video signal is output in place of the signal from the CCD image sensor.

Compared with the example shown in Fig. 3A, in the case in which signal readout is performed 3 times of an even smaller area of the CCD pixel area, there are, of course continuous 3 images, at the top, middle, and bottom of a single screen.

When the above-noted high-speed imaging method is used, however, as shown in Fig.1C and Fig.3B, there are sometimes problems with displaying a number of images within a single screen at the same time.

Specifically, because there had been one image in each field in the past, it is normal to have one image displayed within a viewfinder. In the case in which a plurality of images exist within one screen, however, as described above, if playback and display are done as in the past, the plurality of images will be displayed on a single screen.

Therefore, if a video camera having a viewfinder of the past is used to perform the above-noted high-speed imaging, the operator must use the camera while viewing a plurality of images at once in the viewfinder, not only making it difficult to aim at a desired subject, but also sacrificing ease of viewing, because of the small size of any single image.

That is, as shown in Fig. 4, in the case in which zooming as done in the past is done with respect to a video signal in which two images, image a and image b, exist within a single screen, if zooming is done with the center of the screen as the center of zooming, zooming will cause image a to move upwards and image b to move downwards, so that the upper part of image a the lower part of image b are almost completely lost from the screen display.

Even in the case in which electronic zooming is done with the zooming center at the top part of the screen, so that most of image a is within the screen, the proportion of image b that is displayed on the screen is reduced. Thus, if only one zooming center is provided, at the center of the screen, it is impossible to achieve proper zooming of both of the two images.

In order to actually perform the above-noted zooming, one field or one frame of pixel information from the CCD image sensor is written into a memory, the initial value of readout address and the readout range being adjusted so as to establish the zooming center and zooming magnification. Recently, however, most video cameras, along with this zooming, also perform compensation for camera shake.

When camera shake compensation is performed, movement vectors, which indicate image movement within the CCD pixel area are detected, these movement vectors being used as the basis for calculating the amount of camera shake compensation, so that when pixel information is read out of memory, pixel information is read out only after further adjusting the initial readout address in response to this camera shake compensation amount.

However, because the information with regard to camera shake compensation is not calculated separately for image a and image b, it was not possible to perform separate compensation for image a and image b. Therefore, there was the problem of camera shake on zoomed images.

Additionally, when recording and playing back such a zoomed image, even by playing back image a and image b at the top and the bottom of one screen and then the top and bottom images in the subsequent screen(here it is to be noted that image a and image b are sequentially played back respectively), so as to obtain a smooth slow sequential playback of the top and bottom images, because the two images of the single screen are recorded after different portions thereof are magnified, even if these are continuously display, they do not achieve a slow playback image.

EP-A-0,796,008 discloses a digital camera including a CCD imager. A CCD output signal from the CCD imager is clamped in an analog clamp area by an analog clamp circuit, and then, converted into a digital signal by an A/D converter. The digital signal is thereafter applied to a clamp level calculation circuit which calculates a clamp level of the digital signal, whereby the digital signal can be subjected to digital clamping by a first subtraction circuit. In a quadruple-speed photographing mode, one screen is constituted by eight images which are horizontally compressed to ½ in image at the upper left ¼ portion of the CCD screen. Here, the images on the left and right are images to be respectively formed by the odd line and the even line on the same time base. The color camera signal is inputted to an interpolation processing circuit. The color camera signal outputted from the interpolation calculating circuit is delivered to a recording circuit, as well as a zooming-up circuit. The magnifying circuit, in the quadruple-speed photographing mode, magnifies twice the color camera signal in respective horizontal and vertical directions.

### SUMMARY OF THE INVENTION

According to the present invention, there is provided an electronic zoom circuit as set out in claim 1.

The present invention also provides an electronic zoom processing method as set out in claim 13.

The present invention further provides an electronic zoom circuit as set out in claim 9.

Optional features are set out in the other claims.

An embodiment of the present invention provides an electronic zoom circuit, whereby even if a plurality of images exist within one screen, it is possible to perform proper zooming of each image.

### BRIEF DESCRIPTION OF THE DRAWINGS

In the accompanying drawings:
Fig. 1A through Fig. 1C are block diagrams and display examples that show the operation of a video camera of the past ;
Fig. 2 is a drawing that illustrates the image that is recorded by a video camera of the past ;
Fig.3A and Fig.3B are drawings that generally illustrate a high-speed imaging function;
Fig. 4 is a drawing that illustrates zooming in the past;
Fig. 5 is a block diagram that shows the configuration of a video camera that includes a zoom circuit according to an embodiment;
Fig. 6 is a drawing that illustrates the detection of movement performed in the movement detector;
Fig. 7A through Fig. 7E are timing diagrams that generally show the zooming applied by the zooming circuit;
Fig. 8 is a drawing that shows the main elements of the zoom circuit according to an embodiment;
Fig. 9 is a drawing that illustrates an example of readout of pixel information from the memory;
Fig. 10 is a drawing that illustrates the readout of pixel information from the line memory; and
Fig. 11 is a drawing that illustrates another example of readout of pixel information from the memory.

### DETAILED DESCRIPTION OF THE PREFERRED EMBODIMENTS

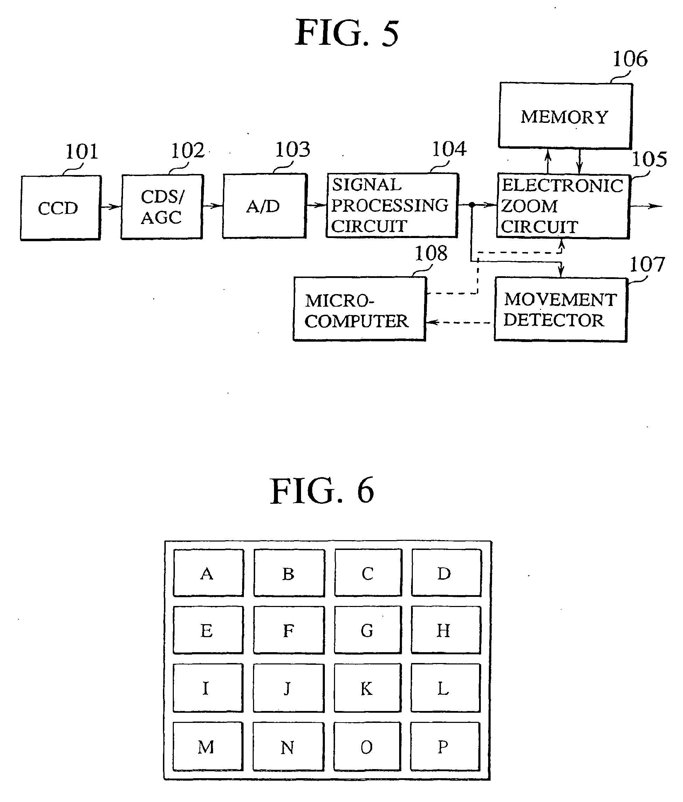

Fig. 5 is a block diagram that illustrates the a video camera which is provided with an electronic zoom circuit.

In Fig. 5, the reference numeral 101 denotes an imaging element (CCD) which converts the image of a subject guided thereto by an objective lens (not shown in the drawing) to a CCD signal and outputs this signal, 102 is a CDS/AGC controller, which eliminates noise components from the CCD signal output by the imaging element 101 and also automatically adjusts the signal to a prescribed level, 103 is an analog-to-digital (A/D) converter, which converts the CCD signal, which has been adjusted to a prescribed level, to a digital signal, and 104 is a signal processor circuit, which converts the CCD signal from the A/D converter 103 to a television signal.

The reference numeral 105 denotes an electronic zoom circuit, which enlarges the television signal that is output from the signal processor circuit 104, in accordance with an instruction from a user, the television signal from the signal processor circuit 104 being captured in memory 106, via the electronic zoom circuit 105.

The reference numeral 107 denotes a movement detector, which detects movement in the television signal from the signal processing circuit 104 for each field, the movement detection results output form this movement detector 107 being used by a microcomputer 108 as the basis for outputting a camera shake compensation signal that performs compensation for camera shake.

Fig. 6 is a drawing that illustrates movement detection processing performed by the movement detector 107, this showing the example in which each field of the television signal that is output from the signal processing circuit 104 is divided into 16 regions, from A to P, and movement detection is performed. The movement detector 107 first performs movement detection within each of the regions A through P, and outputs the movement detection results for each of the regions to the microcomputer 108.

Then, the microcomputer 108, in the case in which there are two images, a and b, in the video signal that is being input, calculates a camera shake compensation signal for image a, based on the movement detection results for regions A through H, and calculates a camera shake compensation signal for image b, based on the movement detection results for regions I through P.

While the above example is that in which the camera shake compensation signal for image a is calculated based on the movement detection results for regions A through H and the camera shake compensation signal for image b is calculated based on the movement detection results for regions I through P, it is also possible, making use of the fact that images a and b are being imaged by one and the same solid-state imaging element, to make a prediction with regard to the camera shake compensation signal for image b based on the camera shake compensation signal for image a, without using the movement detection results from regions I through P.

The electronic zoom circuit 105 reads out pixel information from the memory 106, using the readout address that is established based on the camera shake compensation signal output from the microcomputer 108 and the zoom ratio information. The electronic zoom circuit 105 performs pixel interpolation, based on pixel information read out from the memory 106, so as to enlarge the video signal.

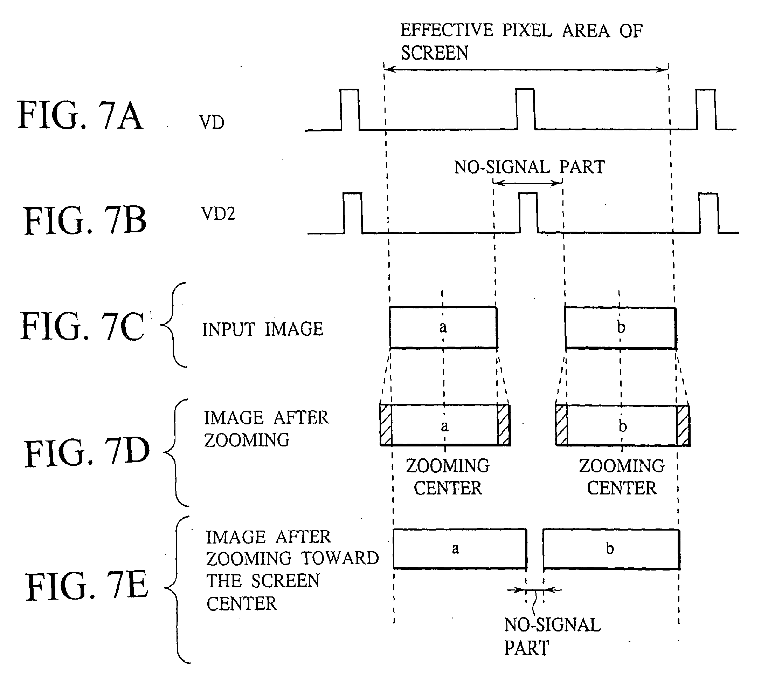

Fig 7A and Fig. 7B are drawings that generally illustrate the zoom processing that is done by the electronic zoom circuit 105. The signal VD shown in Fig. 7A is a vertical sync signal that is included in the television signal that is output from the signal processing circuit 104. The signal VD2 shown in Fig. 7B is the vertical sync signal that has a frequency that is twice the frequency of the vertical sync signal VD. Fig. 7C shows the input image before performing zooming. In this manner, image a and image b are continuously input in the effective area of a screen.

At the electronic zoom circuit 105, as shown in Fig. 7C, when two images are input in 1 field, two zooming centers are provided based on the VD vertical sync signal shown in Fig. 7B and each of the images are zoomed about these different zooming centers as shown in Fig. 7D. As shown in Fig. 7E, when a mode is selected in which the two images are enlarged so that they approach the center of the screen, it is possible to have both image a and image b be held completely within the screen in the vertical direction.

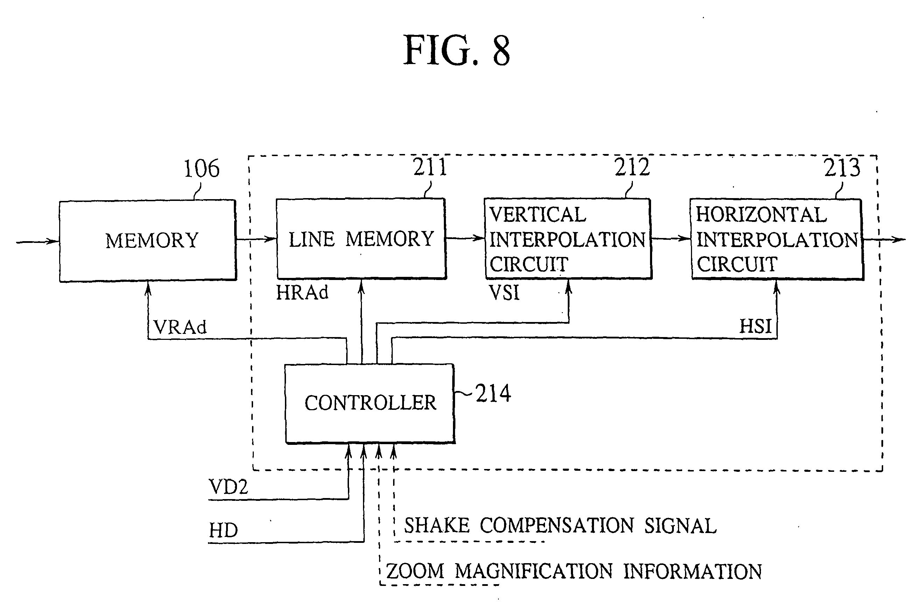

Next, using Fig. 8, the general configuration of the electronic zoom circuit 105 will be described.

In Fig. 8, the reference numeral 211 denotes a line memory, which, of the pixel information for a plurality of lines that is read out in sequence from the memory 106, holds within it the pixel information for a prescribed line, and which simultaneously outputs only part of the pixel information for each.line in the horizontal direction, 212 is a vertical interpolation circuit, which performs vertical interpolation between pixels in the vertical direction, based on a pixel information for a plurality of lines that is output from the line memory 211, and 213 is a horizontal interpolation circuit, which performs horizontal interpolation between pixels in the horizontal direction, based on pixel information that is output form the vertical interpolation circuit 212.

The reference numeral 214 denotes a controller, to which are input the vertical sync signal VD2 that has a frequency that is two times that of the vertical sync signal VD, the horizontal sync signal HD that is included in the television signal that is output from the signal processor circuit 104, and the camera shake compensation signal and zoom ratio that are output from the microcomputer 108, this controller 214 outputting a vertical readout address VRAd for readout of pixel information from the memory 106, a horizontal readout address HRAd for readout of pixel information from the line memory 211, vertical interpolation information VSI that is required when performing vertical interpolation in the vertical interpolation circuit 212, and horizontal interpolation information HIS that is required when performing horizontal interpolation in the horizontal interpolation circuit 213.

While the above case is that in which the vertical sync signal VD2, which has a frequency that is twice that of the vertical sync signal VD, is generated outside the zoom processing circuit 105 and input thereto, it is also possible to employ a configuration in which only the vertical sync signal VD is input to the zoom processing circuit 105, with the vertical sync signal VD2 being internally generated within the zoom processing circuit 105.

Although not shown in the drawings, the memory 106, line memory 211, vertical interpolation circuit 212, and horizontal interpolation circuit 213 are all supplied a clock signal from the controller 214, the timing of this clock signal being used to control the writing of pixel information, the readout of pixel information, and the performing of interpolation.

The operation of the electronic zoom circuit 105 is as follows. The first case described is that in which zooming is performed about the center of each of the images, as shown in Fig. 7D. For the purpose of this description, four one-line line buffers are connected in series and used as the line memory 211, the pixel information for the four lines that is output from each line buffer being used to perform vertical interpolation at the vertical interpolation circuit 212.

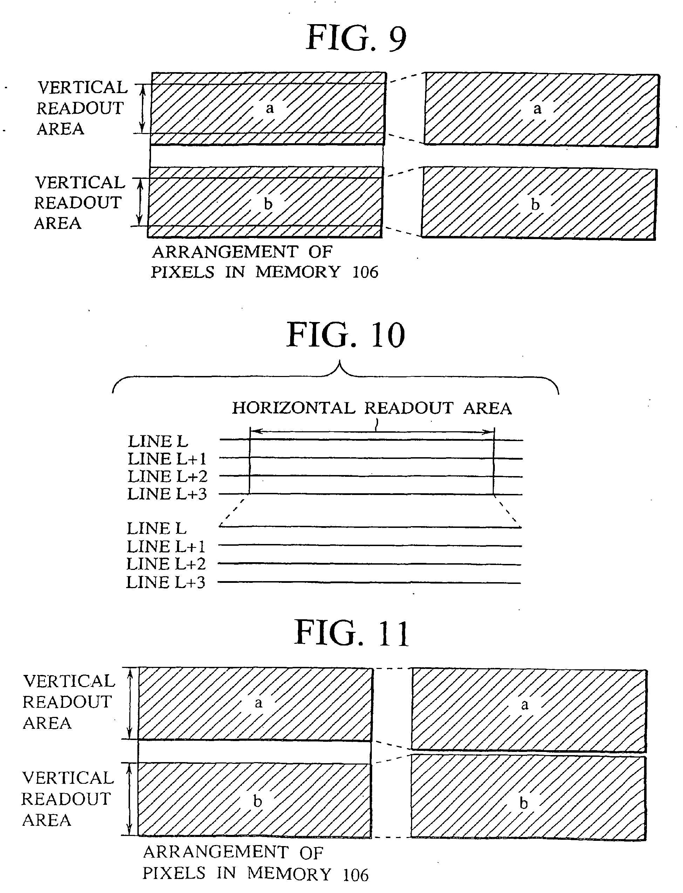

The television signal that is output from the signal processing circuit 104 and in which images a and b exist is first written into the memory 106, this being arranged in memory 106 as shown in Fig. 9.

Then, the controller 214 generates a readout clock for memory 106, based on the input vertical sync signal VD2, and also a vertical readout address VRAd, based on the zoom ratio and camera shake compensation signal that are output from the microcomputer 108.

The initial value of the vertical readout address VRAd, as shown in Fig. 7D, is not the value that is set so that enlargement of image a is done by zooming about the center of the image, but is rather the value after compensation of image a for camera shake.

At this point, the pixel information for all lines making up image a are written into the memory 106, but the pixel information for only part of the lines making up image a is read out from the memory 106 for each line. In this manner, while pixel information for all lines of image a is not read out from the memory 106, because there are lines that are read a plurality of times, based on the vertical readout address VRAd from the controller 214, the number of lines that are written into the memory 106 is the same as the number of lines that make up the image a that is read out from the memory 106.

When the readout of pixel information of the lines that make up image a is completed, the readout of pixel information of lines that make up image b starts. At this time, the controller 214 generates a vertical readout address VRAd, based on the zoom ratio information and camera shake compensation signal for image b that are output from the microcomputer 108, and only part of the line information making up image b is read from the memory 106, the same as was done for image a.

The initial value of the vertical readout address VRAd, as shown in Fig. 7D, is not the value that is set so that enlargement of image b is done by zooming about the center of the image, but is rather the value after compensation of image b for camera shake.

While pixel information for all lines in the image b are not read out from the memory 106, similar to the case for image a, because there are lines that are read a plurality of times, based on the vertical readout address VRAd from the controller 214, the number of lines that are written into the memory 106 is the same as the number of lines that make up the image b that is read out from the memory 106.

In this manner, the pixel information output for each line from the memory 106 is input to the line memory 211, so that pixel information for 4 lines is held therein, as shown in Fig. 10. The controller 214 generates a readout clock for the line memory 211, based on the input horizontal sync signal HD, and also generates a horizontal readout address HRAd, based on the zoom ratio information and camera shake compensation signal from the microcomputer 108.

Each of the line buffers of the line memory 211 simultaneously outputs the pixel information for 4 pixels that are neighboring in the vertical direction, based on the horizontal readout address HRAd from the microcomputer 108. At this point, while all the pixel information for each line is written in the line memory 211, only part of the pixel information in the horizontal direction in the one line pixel information from the line memory 211 is read out.

While all the pixel information for one line from the line memory 211 is not readout out, because there are pixels that are read a plurality of times, based on the horizontal readout address HRAd from the controller 214, the number of pixels that are written into the line memory 211 is the same as the number of pixels that make up each line that is read out from the line memory 211.

Then, the pixel information output from the line memory 211 is vertically interpolated by the vertical interpolation circuit 212. While the operation of the vertical interpolation circuit 212 will not be described in detail herein, based on vertical interpolation information VSI responsive to the zoom ratio that is output from the controller 214 and based on the pixel information that is output from the line memory 211, the interpolated output is made by performing a calculation, based on the pixel information of a plurality of CCD pixels that vertically neighbor, of a virtual (non-existing) CCD pixel that is disposed between lines in the CCD pixel area.

After completion of vertical-direction interpolation in the vertical interpolation circuit 212, the resulting pixel information is input to the horizontal interpolation circuit 213, which then performs horizontal-direction interpolation. With regard to horizontal interpolation as well, similar to the case of vertical interpolation, based on horizontal interpolation information that is output from the controller 214 and pixel information that is output from the vertical interpolation circuit 212, the interpolated output is made by performing a calculation, based on the pixel information of a plurality of CCD pixels that horizontally neighbor, of a virtual (non-existing) CCD pixel that is disposed between horizontally neighboring pixels in the CCD pixel area.

By performing interpolation of pixel information in both vertical and horizontal directions as described above, image a and image b are enlarged by zooming about separate zooming centers, and as shown in Fig. 7D only part of the image a and b in the vertical direction are held within the single screen.

The operation of the electronic zoom circuit 105 for the case in which zooming is done so that image a and image b are drawn toward the center of the screen is described below.

If zooming is to be done so that image a and image b are drawn toward the center of the screen, the vertical readout address VRAd for reading image a and image b from the memory 106 can be changed. That is, with merely a difference in the vertical readout address VRAd that is output by the controller 214 to the memory 106, the operation of the line memory 211, the vertical interpolation circuit 212, and the horizontal interpolation circuit 213 are the same as described above.

Fig. 11 is a drawing that illustrates the pixel information for each of the lines read out from the memory 106 in the case in which a zooming mode in which the two images are drawn toward the center of the screen is selected.

As described earlier for the other zooming mode, the controller 214 generates a readout clock, based on the input vertical sync signal VD2, and also generates, based on the zoom ratio information from the microcomputer 108 and camera shake compensation signal from the microcomputer 108, a vertical readout address VRAd, the initial value of this vertical readout address VRAd being an address obtained by correcting the address of the upper left part of the memory based on the camera shake compensation signal.

While the pixel information for all lines that make up image a written into the memory 106 are read out, because there are lines that are read a plurality of times, based on the vertical readout address VRAd from the controller 214, the number of lines that make up the image a that are read out from the memory 106 is greater than the number of lines that make up the image and that are written into the memory 106.

When the readout of the pixel information of lines that make up the image a is completed, the readout of pixel information of lines that make up the image b starts.

When this is done, the controller 214 generates a vertical readout address VRAd, based on the zoom ratio and the camera shake compensation signal for the image b that are output from the microcomputer 108.

The initial value of the above-noted readout address VRAd is an address value obtained by correcting the address value set so that the lowermost part of image b is held within 1 field, based on the camera shake compensation signal for image b. Because there are lines that are read out a plurality of times based on the vertical readout address from the controller 214, the number of lines that make up image b that are read out from the memory 106 is greater than the number of lines that make up image b that are written in the memory 106.

Thus, the pixel information that is read out from the memory 106 is stored into the line memory 211 and then only part of the pixel information of one line in the horizontal direction is read out from the line memory 211, and then vertical-direction interpolation and horizontal-direction interpolation are performed upon the read-out pixel information by the vertical interpolation circuit 212 and the horizontal interpolation circuit 213, respectively. It is also possible to enlarge images a and b using zooming about different zooming centers, and also to fit the input image a and image b completely within the screen in the vertical direction.

When a television signal that has been zoomed as described above is recorded, it is possible upon playback of the signal to display image a and image b one on top of the other and to performing masking processing of one of the images, so as to selectively display an image within the screen.

From another view, because image a and image b have the same parts enlarged and are recorded after compensation of the images for camera shake, it is possible to perform sequential slow playback of the two images a and b and the subsequent two images (here it is to be noted that image a and image b are also sequentially played back) with enhanced smoothness.

Because with the electronic zoom circuit of an embodiment zooming of each of a plurality of images that exist within one screen is performed separately, it is possible, to performing zooming of only one image (a or b, for example), and to record a video signal from which a display is made of a wide-angle image and a telescopic image next to each other within one screen.

It should be noted that, while in the above-noted embodiment the electronic zoom is used in the recording subsystem of a video camera, the present invention is not limited to this application, and can be applied as well to the playback subsystem of a video camera, in which case by arbitrarily changing the zooming center for each image in the vertical and horizontal directions, it is possible to zoom any arbitrary area of each of the images.

From the foregoing descriptions, according to an embodiment, since each image included in the video signal is enlarged about its distinctive enlargement center, it is possible to perform proper zooming of each image.

Further, according to an embodiment, since each of n images is subjected to its distinctive compensation processing for camera shake, it is possible to perform optimal camera shake compensation processing for each image so as to avoid displaying each image with camera shake.

Furthermore, according to an embodiment, since n images are enlarged about one and the same enlargement center and with one and the same enlargement ratio, it is preferable upon displaying the n images as continuous time sequence images.

It should be understood that many modifications and adaptations of the invention will become apparent to those skilled in the art and it is intended to encompass such modifications and changes in the scope of the claims appended hereto.

## Claims

1. An electronic zoom circuit (105) for a video signal including n (n is an integer 2 or greater) images when displayed on a screen, comprising:
a controller (214) configured to generate vertical interpolation information, horizontal interpolation information, and memory address control information based on magnification information indicative of a zoom ratio for the video signal;
a vertical interpolation circuit (212) configured to vertically interpolate the video signal based on the vertical interpolation information outputted from the controller (214);
a horizontal interpolation circuit (213) configured to horizontally interpolate the video signal based on the horizontal interpolation information outputted from the controller (214); and
a memory (211) for storing image data corresponding to the video signal and from which the image data corresponding to a predetermined screen area is read out based on the memory address control information outputted from the controller (214) and is supplied to the vertical interpolation circuit (212) and the horizontal interpolation circuit (213),
wherein:
the controller (214) is configured to set the vertical interpolation information, the horizontal interpolation information, and the memory address control information such that the n images are subjected to a vertical and horizontal zoom processing with respective image centers as a zoom center in respective n areas obtained by dividing the image data corresponding to one screen; and
the circuit is configured to process a video signal obtained by an imaging device having a function of generating a camera shake compensation signal, and the controller (214) is configured to carry out camera shake compensation processing for each of the n images by modifying the memory address control information based on a movement detection result for each area.

2. An electronic zoom circuit (105) according to claim 1, wherein the controller is configured to generate the vertical interpolation information, the horizontal interpolation information and the memory address control information based on zoom ratios for the n images that are identical with one another.

3. An electronic zoom circuit (105) according to claim 1, wherein the controller is configured to generate the vertical interpolation information, the horizontal interpolation information and the memory address control information based on zoom ratios for the n images that are different from one another.

4. An electronic zoom circuit (105) according to claim 3, wherein the circuit is operable to process a video signal containing n images such that at least one image of the n images is a wide-angle image having a zoom ratio of 1 and at least one other image of the n images is a telescopic image having a zoom ratio greater than 1.

5. An electronic zoom processing method for a video signal including n (n is an integer 2 or greater) images when displayed on a screen, comprising:
storing image data corresponding to the video signal into a memory (211);
generating vertical interpolation information, horizontal interpolation information, and memory address control information based on magnification information indicative of a zoom ratio for the video signal;
reading out the image data corresponding to a predetermined screen area based on the memory address control information;
interpolating the video signal vertically based on the vertical interpolation information; and
interpolating the video signal horizontally based on the horizontal interpolation information,
wherein:
the vertical interpolation information, the horizontal interpolation information, and the memory address control information are set such that the n images are subjected to a vertical and horizontal zoom processing with respective image centers as a zoom center in respective n areas obtained by dividing the image data corresponding to one screen; and
the video signal was obtained by an imaging device having a function of generating a camera shake compensation signal, and camera shake compensation processing for each of the n images is carried out by modifying the memory address control information based on a movement detection result for each area.

6. An electronic zoom processing method according to claim 5, wherein the vertical interpolation information, the horizontal interpolation information and the memory address control information are generated based on zoom ratios for the n images that are identical with one another.

7. An electronic zoom processing method according to claim 5, wherein the vertical interpolation information, the horizontal interpolation information and the memory address control information are generated based on zoom ratios for the n images that are different from one another.

8. An electronic zoom processing method according to claim 7, wherein at least one image of the n images is a wide-angle image having a zoom ratio of 1 and at least one other image of the n images is a telescopic image having a zoom ratio greater than 1.

9. An electronic zoom circuit (105) operable to receive a video signal including n (n is an integer 2 or greater) images for each field period and a synchronous pulse having a frequency n times as high as a frequency of a horizontal synchronous signal of the video signal and to subject the n images included in the video signal to respective zoom processings with respective image centers as a zoom center, the circuit having a controller operable to carry out each camera shake compensation processing for the n images based on movement detection result for each area.

## Patentansprüche

1. Eine elektronische Zoomschaltung (105) für ein Videosignal, das n (n ist eine ganze Zahl von 2 oder größer) Bilder enthält, wenn auf einem Bildschirm angezeigt, umfassend:
eine Steuervorrichtung (214), die konfiguriert ist, vertikale Interpolationsinformation, horizontale Interpolationsinformation und Speicheradresssteuerinformation basierend auf Vergrößerungsinformation, die ein Zoomverhältnis für das Videosignal anzeigt, zu generieren;
eine vertikale Interpolationsschaltung (212), die konfiguriert ist, das Videosignal basierend auf der vertikalen Interpolationsinformation, die von der Steuervorrichtung (214) ausgegeben wird, vertikal zu interpolieren;
eine horizontale Interpolationsschaltung (213), die konfiguriert ist, das Videosignal basierend auf der horizontalen Interpolationsinformation, die von der Steuervorrichtung (214) ausgegeben wird, horizontal zu interpolieren; und
einen Speicher (211) zum Speichern von Bilddaten entsprechend dem Videosignal und von dem die Bilddaten entsprechend einem vorbestimmten Bildschirmbereich ausgelesen werden basierend auf der Speicheradresssteuerinformation, die von der Steuervorrichtung (214) ausgegeben wird, und der vertikalen Interpolationsschaltung (212) und der horizontalen Interpolationsschaltung (213) zugeführt wird,
wobei:
die Steuervorrichtung (214) konfiguriert ist, die vertikale Interpolationsinformation, die horizontale Interpolationsinformation und die Speicheradresssteuerinformation derart zu setzen, dass die n Bilder Gegenstand einer vertikalen und horizontalen Zoomverarbeitung mit jeweiligen Bildmittelpunkten als einen Zoommittelpunkt in jeweiligen n Bereichen sind, die durch Unterteilen der Bilddaten entsprechend einem Bildschirm erhalten werden; und
die Schaltung konfiguriert ist, ein Videosignal zu verarbeiten, das erhalten wird durch eine Bildgebungseinrichtung mit einer Funktion zum Generieren eines Kameraerschütterungskompensationssignals, und die Steuervorrichtung (214) konfiguriert ist, eine Kameraerschütterungskompensationsverarbeitung für jedes der n Bilder auszuführen durch Modifizieren der Speicheradresssteuerinformation basierend auf einem Bewegungserfassungsergebnis für jeden Bereich.

2. Eine elektronische Zoomschaltung (105) nach Anspruch 1, wobei die Steuervorrichtung konfiguriert ist, die vertikale Interpolationsinformation, die horizontale Interpolationsinformation und die Speicheradresssteuerinformation basierend auf Zoomverhältnissen für die n Bilder zu generieren, die miteinander identisch sind.

3. Eine elektronische Zoomschaltung (105) nach Anspruch 1, wobei die Steuervorrichtung konfiguriert ist, die vertikale Interpolationsinformation, die horizontale Interpolationsinformation und die Speicheradresssteuerinformation basierend auf Zoomverhältnissen für die n Bilder zu generieren, die voneinander verschieden sind.

4. Eine elektronische Zoomschaltung (105) nach Anspruch 3, wobei die Schaltung betriebsfähig ist, ein Videosignal, das n Bilder enthält, derart zu verarbeiten, dass mindestens ein Bild der n Bilder ein Weitwinkelbild mit einem Zoomverhältnis von 1 ist und mindestens ein anderes Bild der n Bilder ein teleskopisches Bild mit einem Zoomverhältnis größer als 1 ist.

5. Ein elektronisches Zoomverarbeitungsverfahren für ein Videosignal, das n (n ist eine ganze Zahl von 2 oder größer) Bilder enthält, wenn auf einem Bildschirm angezeigt, umfassend:
Speichern von Bilddaten entsprechend dem Videosignal in einen Speicher (211);
Generieren vertikaler Interpolationsinformation, horizontaler Interpolationsinformation und Speicheradresssteuerinformation basierend auf Vergrößerungsinformation, die ein Zoomverhältnis für das Videosignal anzeigt;
Auslesen der Bilddaten entsprechend einem vorbestimmten Bildschirmbereich basierend auf der Speicheradresssteuerinformation;
vertikales Interpolieren des Videosignals basierend auf der vertikalen Interpolationsinformation; und
horizontales Interpolieren des Videosignals basierend auf der horizontalen Interpolationsinformation,
wobei:
die vertikale Interpolationsinformation, die horizontale Interpolationsinformation und die Speicheradresssteuerinformation derart gesetzt sind, dass die n Bilder Gegenstand einer vertikalen und horizontalen Zoomverarbeitung mit jeweiligen Bildmittelpunkten als einen Zoommittelpunkt in jeweiligen n Bereichen sind, die durch Unterteilen der Bilddaten entsprechend einem Bildschirm erhalten werden; und
das Videosignal durch eine Bildgebungseinrichtung mit einer Funktion zum Generieren eines Kameraerschütterungskompensationssignals erhalten wurde, und eine Kameraerschütterungskompensationsverarbeitung ausgeführt wird für jedes der n Bilder durch Modifizieren der Speicheradresssteuerinformation basierend auf einem Bewegungserfassungsergebnis für jeden Bereich.

6. Ein elektronisches Zoomverarbeitungsverfahren nach Anspruch 5, wobei die vertikale Interpolationsinformation, die horizontale Interpolationsinformation und die Speicheradresssteuerinformation generiert werden basierend auf Zoomverhältnissen für die n Bilder, die miteinander identisch sind.

7. Ein elektronisches Zoomverarbeitungsverfahren nach Anspruch 5, wobei die vertikale Interpolationsinformation, die horizontale Interpolationsinformation und die Speicheradresssteuerinformation generiert werden basierend auf Zoomverhältnissen für die n Bilder, die voneinander verschieden sind.

8. Ein elektronisches Zoomverarbeitungsverfahren nach Anspruch 7, wobei mindestens ein Bild der n Bilder ein Weitwinkelbild mit einem Zoomverhältnis von 1 ist und mindestens ein anderes Bild der n Bilder ein teleskopisches Bild mit einem Zoomverhältnis größer als 1 ist.

9. Eine elektronische Zoomschaltung (105), die betriebsfähig ist, ein Videosignal zu empfangen, das enthält n (n ist eine ganze Zahl von 2 oder größer) Bilder für jede Feldperiode und einen synchronen Impuls mit einer Frequenz von n mal so hoch wie eine Frequenz eines horizontalen synchronen Signals des Videosignals, und die n Bilder, die in dem Videosignal enthalten sind, jeweiligen Zoomverarbeitungen mit jeweiligen Bildmittelpunkten als einen Zoommittelpunkt zu unterziehen, wobei die Schaltung eine Steuervorrichtung hat, die betriebsfähig ist, jede Kameraerschütterungskompensationsverarbeitung für die n Bilder basierend auf einem Bewegungserfassungsergebnis für jeden Bereich auszuführen.

## Revendications

1. Circuit de zoom électronique (105) pour un signal vidéo incluant n images (n est un nombre entier égal ou supérieur à 2) lorsqu'affichées sur un écran, comprenant:
une unité de commande (214) configurée pour générer une information d'interpolation verticale, une information d'interpolation horizontale, et une information de commande d'une adresse mémoire sur la base d'une information d'agrandissement indiquant un rapport de zoom pour le signal vidéo;
un circuit d'interpolation verticale (212) configuré pour interpoler verticalement le signal vidéo sur la base de l'information d'interpolation verticale faite sortir à partir de l'unité de commande (214);
un circuit d'interpolation horizontale (213) configuré pour interpoler horizontalement le signal vidéo sur la base de l'information d'interpolation horizontale faite sortir à partir de l'unité de commande (214); et
une mémoire (211) pour stocker des données d'images correspondant au signal vidéo et à partir de laquelle les données d'images correspondant à une zone d'écran prédéterminée sont lues sur la base de l'information de commande d'une adresse mémoire faite sortir à partir de l'unité de commande (214) et sont alimentées au circuit d'interpolation verticale (212) et au circuit d'interpolation horizontale (213),
où
l'unité de commande (214) est configurée pour régler l'information d'interpolation verticale, l'information d'interpolation horizontale, et l'information de commande d'une adresse mémoire de manière à ce que les n images soient soumises à un traitement de zoom vertical et horizontal avec des centres d'images respectifs comme un centre de zoom dans n zones respectives obtenues en divisant les données d'images correspondant à un écran; et
le circuit est configuré pour traiter un signal vidéo obtenu par un dispositif d'imagerie ayant une fonction de générer un signal de compensation de tremblement de caméra, et l'unité de commande (214) est configurée pour exécuter un traitement de compensation de tremblement de caméra pour chacune des n images en modifiant l'information de commande d'une adresse mémoire sur la base d'un résultat de détection de mouvement pour chaque zone.

2. Circuit de zoom électronique (105) selon la revendication 1, dans lequel l'unité de commande est configurée pour générer l'information d'interpolation verticale, l'information d'interpolation horizontale et l'information de commande d'une adresse mémoire sur la base de rapports de zoom pour les n images qui sont identiques les unes aux autres.

3. Circuit de zoom électronique (105) selon la revendication 1, dans lequel l'unité de commande est configurée pour générer l'information d'interpolation verticale, l'information d'interpolation horizontale et l'information de commande d'une adresse mémoire sur la base de rapports de zoom pour les n images qui sont différentes les unes des autres.

4. Circuit de zoom électronique (105) selon la revendication 3, dans lequel le circuit est exploitable pour traiter un signal vidéo contenant n images de manière à ce qu'au moins une image des n images soit une image grand-angulaire ayant un rapport de zoom de 1 et au moins une autre image des n images soit une image télescopique ayant un rapport de zoom supérieur à 1.

5. Procédé de traitement de zoom électronique pour un signal vidéo incluant n images (n est un nombre entier supérieur ou égal à 2) lorsqu'affichées sur un écran, comprenant:
stocker des données d'images correspondant au signal vidéo dans une mémoire (211);
générer une information d'interpolation verticale, une information d'interpolation horizontale, et une information de commande d'une adresse mémoire sur la base d'une information d'agrandissement indiquant un rapport de zoom pour le signal vidéo;
lire les données d'images correspondant à une zone d'écran prédéterminée sur la base de l'information de commande d'une adresse mémoire;
interpoler le signal vidéo verticalement sur la base de l'information d'interpolation verticale; et
interpoler le signal vidéo horizontalement sur la base de l'information d'interpolation horizontale,
où
l'information d'interpolation verticale, l'information d'interpolation horizontale, et l'information de commande d'une adresse mémoire sont réglées de manière à ce que les n images soient soumises à un traitement de zoom vertical et horizontal avec des centres d'images respectifs comme un centre de zoom dans n zones respectives obtenues en divisant les données d'images correspondant à un écran; et
le signal vidéo a été obtenu par un dispositif d'imagerie ayant une fonction de générer un signal de compensation de tremblement de caméra, et un traitement de compensation de tremblement de caméra pour chacune des n images est effectué en modifiant l'information de commande d'une adresse mémoire sur la base d'un résultat de détection de mouvement pour chaque zone.

6. Procédé de traitement de zoom électronique selon la revendication 5, dans lequel l'information d'interpolation verticale, l'information d'interpolation horizontale, et l'information de commande d'une adresse mémoire sont générées sur la base de rapports de zoom pour les n images qui sont identiques les unes aux autres.

7. Procédé de traitement de zoom électronique selon la revendication 5, dans lequel l'information d'interpolation verticale, l'information d'interpolation horizontale, et l'information de commande d'une adresse mémoire sont générées sur la base de rapports de zoom pour les n images qui sont différentes les unes des autres.

8. Procédé de traitement de zoom électronique selon la revendication 7, dans lequel au moins une image des n images est une image grand angulaire ayant un rapport de zoom de 1 et au moins une autre image des n images est une image télescopique ayant un rapport de zoom supérieur à 1.

9. Circuit de zoom électronique (105) exploitable pour recevoir un signal vidéo incluant n images (n est un nombre entier supérieur ou égal à 2) pour chaque période de champ et une impulsion synchrone ayant une fréquence de n fois une fréquence d'un signal synchrone horizontal du signal vidéo et pour soumettre les n images incluses dans le signal vidéo à des traitements de zoom respectifs avec des centres d'images respectifs comme un centre de zoom, le circuit ayant un unité de commande exploitable pour exécuter chaque traitement de compensation de tremblement de caméra pour les n images sur la base d'un résultat de détection de mouvement pour chaque zone.
